# EUROPEAN PATENT SPECIFICATION

(11) **EP 1 676 887 B1**
(45) Date of publication and mention of the grant of the patent: **23.05.2007**
(21) Application number: 05112371.9
(22) Date of filing: 19.12.2005
(51) Int. Cl.: C08L 75/06, C08K 5/24, C08K 5/13, C08K 5/07

(54) **Composition and process for improving heat and weathering stability of segmented polyurethane polymers**
Zusammensetzung und Verfahren zur Verbesserung der Wärmestabilität und der Witterungsstabilität von segementierten Polyurethanpolymeren
Composition et procédé pour améliorer la stabilité thermique et la résistance aux intempéries de polymères polyuréthanes segmentés

(30) Priority: 29.12.2004 EP 04107051
(43) Date of publication of application: 05.07.2006
(73) Proprietor: Ciba Specialty Chemicals Holding Inc., 4002 Basel (CH)
(72) Inventor: Chan, Soke Meng, 42 Canberra Drive 11-07 768434 Singapore (SG); Goh, Chin Siong, Anchorvale Drive 08-05 541301, Singapore (SG); Junaidi, Muhamadzen, 467010,Singapore (SG)

(56) References cited:
- EP-A- 0 909 788
- US-A- 3 149 998
- US-A1- 2002 099 218

## Description

The present invention relates to the stabilization of segmented polyurethanes by the addition of a combination of antioxidants, benzofuranones and or sterically hindered amines and a hydrazine or hydrazide.

Segmented polyurethanes are widely used as elastomeric fibers, as substitutes for vulcanized rubber. This type of fibers is well known under the name Spandex fibers (H. G. Elias Makromoleküle, 3^{rd} edition 1975, Hüthig and Wepf, Basel and Heidelberg). A major problem of Spandex fibers is their susceptibility to heat, weathering in outdoor applications and discoloration under gas fading conditions.

Today Spandex fibers are, therefore, stabilized with different stabilizers to improve their properties. A common approach is the stabilization with phenolic antioxidants. A further improvement can be achieved by the addition of a phenolic antioxidant and a benzofuranone type stabilizer, as for example described in Research Disclosure 1997 12, 404; ISSN 0374-4353.

It has now been found that a further improvement with respect to heat stability, weathering stability and gas fading stability can be achieved when a further stabilizer selected from the class of hydrazines or hydrazides is added.

One aspect of the invention is a composition comprising a segmented polyurethane and
a) one or more phenolic antioxidants,
b) a benzofuranone stabilizer and/or a sterically hindered amine stabilizer and
c) a hydrazine or hydrazide stabilizer.

Preferably the segmented polyurethane is a Spandex fiber. In Spandex fibers the polymer chain is a segmented block copolymer containing long, randomly coiled, liquid, soft segments that move to a more linear, lower entropy, structure. The hard segments act as "virtual crosslinks" that tie all the polymer chains together into an infinite network. This network prevents the polymer chains from slipping past each other and taking on a permanent set or draw. When the stretching force is removed, the linear, low entropy, soft segments move back to the preferred randomly coiled, higher entropy state, causing the fiber to recover to its original shape and length. This segmented block copolymer is formed in a multi-step process. It is extruded into a fiber as a monofilament threadline or for most products into a multiplicity of fine filaments that are coalesced shortly after they are formed into a single threadline (American Fiber Manufacturers Association Inc.).

According to the Federal Trade Commission of the United States of America the definition for Spandex Fiber is : A manufactured fiber in which the fiber forming substance is a long-chain synthetic polymer comprised of at least 85% of a segmented polyurethane.

Preferably the phenolic antioxidant is selected from the group consisting of 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methyiundec-1'-yl)phenol, 2,4-dimethyl-6-(1'-methylheptadec-1'-yl)phenol, 2,4-dimethyl-6-(1'-methyltridec-1'-yl)phenol, 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate, α-tocopherol, β-tocopherol, γ-tocopherol, δ-tocopherol, 2,2'-methylenebis(6-tert-butyl-4-methylphenol), 2,2'-methylene-bis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1 -bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane, esters of β-(3,5-di-tert-butyl-4-hydroxyphenyl)-propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-(3-(3-tert-butyl-4-hydroxy-5-methylphenyl)propionyloxy}-1,1-dimethylethyl]-2,4,8,10-tetraoxaspiro[5.5]undecane, esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard® XL-1, supplied by Uniroyal) and mixtures thereof.

Preferably the benzofuranone stabilizer is selected from the group consisting of those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctylbenzofuran-2-one.

Preferably the sterically hindered amine stabilizer is selected from the group consisting of bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro-[4,5]decane, a reaction product of 7,7,9,9-tetramethyl-2-cycloundecyl-1-oxa-3,8-diaza-4-oxo-spiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)-amino)-s-triazine.

Preferably the hydrazine or hydrazide stabilizer is selected from the group consisting of N-salicylal-N'-salicyloyl hydrazine, N,N'-bis(salicyloyl)hydrazine, N,N'-bis(3,5-di-tert-butyl-4-hydroxyphenylpropionyl)hydrazine, bis(benzylidene)oxalyl dihydrazide, isophthaloyl dihydrazide, sebacoyl bisphenylhydrazide, N,N'-diacetyladipoyl dihydrazide, N,N'-bis(salicyloyl)oxalyl dihydrazide and N,N'-bis(salicyloyl)thiopropionyl dihydrazide.

For example the phenolic antioxidant is a compound of formula (A) 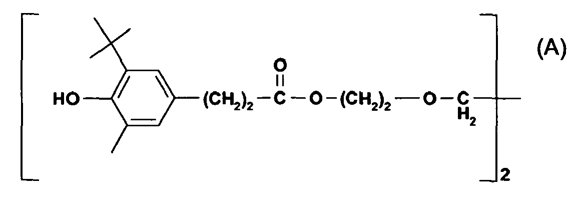 or
formula (B)

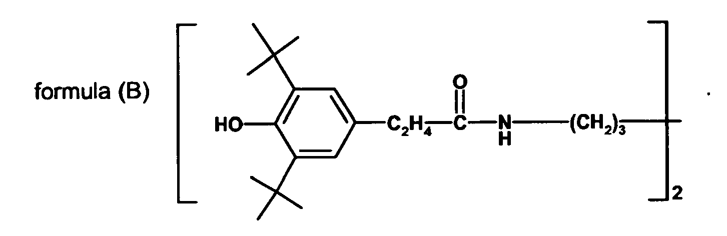

For instance the benzofuranone stabilizer is of formula (C)

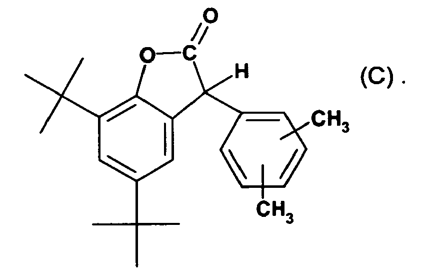

For instance the sterically hindered amine is of formula (D) or (E) 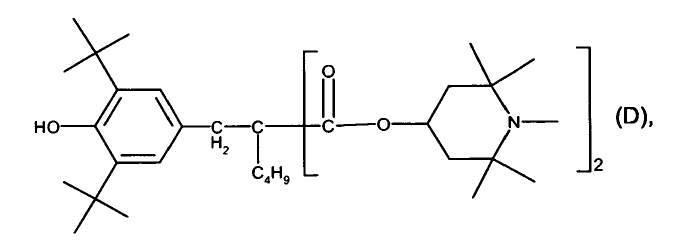 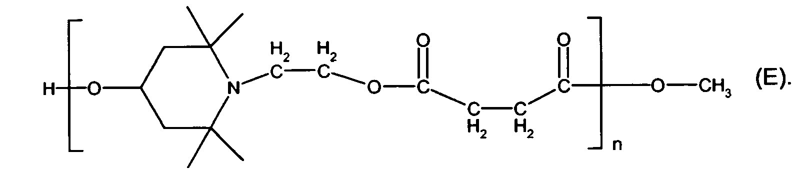 CAS No. 65447-77-0

Preferably the hydrazine or hydrazide is of formula (F) or (G)

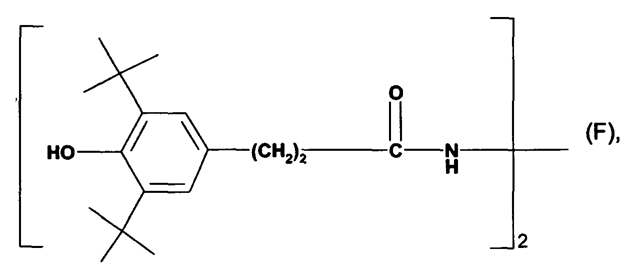

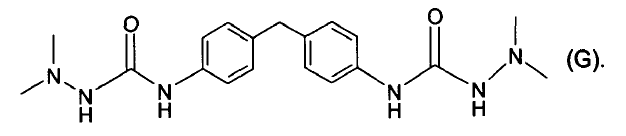

In a specific embodiment of the invention the phenolic antioxidant is present in an amount from 0.3 - 1.0% by weight, the benzofuranone and/or sterically hindered amine stabilizer is present in an amount from 0.05 - 0.5% by weight and the hydrazine or hydrazide stabilizer is present in an amount of 0.1 - 0.5% by weight, based on the weight of the segmented polyurethane.

Preferably the total amount of stabilizers is from 0.5 - 3% by weight, based on the weight of the segmented polyurethane.

In a specific embodiment of the invention a UV-absorber is additionally present. Examples for UV-absorbers are given below. In some cases mixtures of UV-absorbers from the classes given below may also be useful.

2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylheoyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 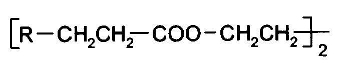 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.

2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.

Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.

The UV-absorbers are typically present in an amount of 0.05 to 5% by weight, based on the weight of the segmented polyurethane.

It is also possible that further additives are added to the composition. Examples are given below. Typical amounts are 0.1 to 1% by weight, based on the weight of the segmented polyurethane.

Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

The following phosphites are especially preferred:

Tris(2,4-di-tert-butylphenyl) phosphite (Irgafos® 168, Ciba Specialty Chemicals Inc.), tris(nonylphenyl) phosphite,

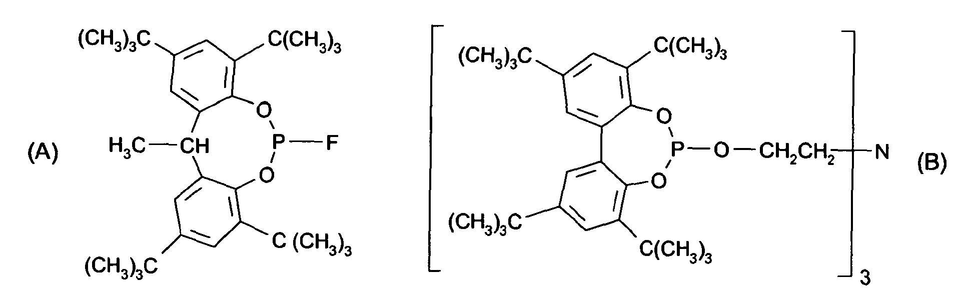

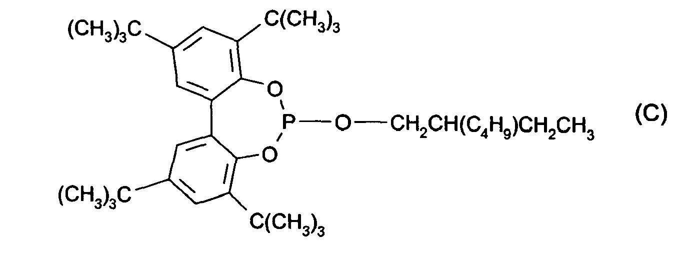

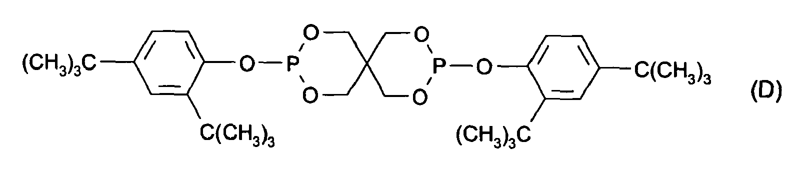

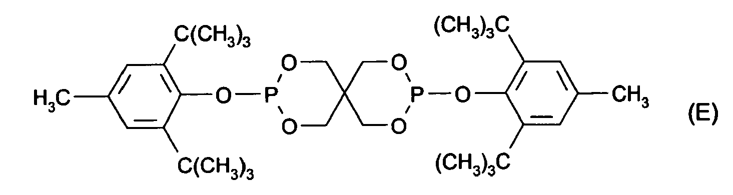

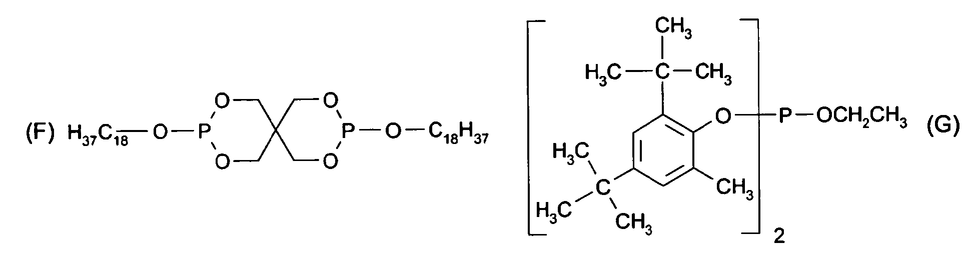

Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

Thiosynergists, for example dilauryl thiodipropionate, dimistryl thiodipropionate, distearyl thiodipropionate or distearyl disulfide.

Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

Polyamide stabilizers, for example copper salts in combination with iodides and/or phosphorus compounds and salts of divalent manganese.

Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

Fillers and reinforcing agents, for example calcium carbonate, silicates, glass fibres, glass beads, asbestos, talc, kaolin, mica, barium sulfate, metal oxides and hydroxides, carbon black, graphite, wood flour and flours or fibers of other natural products, synthetic fibers.

Other additives, for example plasticisers, lubricants, emulsifiers, pigments, rheology additives, catalysts, flow-control agents, optical brighteners, flameproofing agents, antistatic agents and blowing agents.

A further aspect of the invention is a process for improving heat and weathering resistance of a segmented polyurethane comprising incorporating into the segmented polyurethane
a) one or more phenolic antioxidants,
b) a benzofuranone stabilizer and/or a sterically hindered amine stabilizer and
c) a hydrazine or hydrazide stabilizer.

Yet another aspect is the use of a composition as described above as heat and weathering stabilizer and as stabilizer against NOₓ gas exposure for a segmented polyurethane.

Definitions and preferences given for the composition apply also for the other aspects of the invention.

The following examples illustrate the invention.

### Experimental Conditions

### Raw Materials and Abbreviations:

PTMEG is poly(tetramethylene ether)glycol,
MDI is 4,4-methylene-bis(phenylisocyanate),
DMAC is N,N-dimethylacetamine,
Ethylenediamine, Diethylamine.

### Spandex Preparation

PTMEG and MDI are mixed in the ratio of 1.58 moles of MDI per mole of polyether glycol, held at about 60 °C for 120 minutes to yield an isocyanate-terminated polyether. The prepolymer is cooled and dissolved in DMAC to give a mixture containing 40% solids.
Mixture of ethylenediamine and diethylamine in DMAC are poured slowly into the mixture at room temperature, under water bath cooling and vigorous stirring.
The resultant segmented polyurethane solution is stirred for 5 minutes at 100°C, it has 29% solids.
Aliquots are taken from the bulk polyurethane solution, additives are added to the aliquots at the required concentrations based on the solid content.
Films are cast on glass plates to a thickness of 250 µm and 50 µm when dried.
Ageing Tests
Xenon-arc weathering,
Test method : ASTM G151 / G155
Dry cycle, borosilicate inner and outer filter
Irradiance @ 0.35 W/m²,
Black panel temperature : 63 ± 3 °C, relative humidity : 60 ± 5%.
Gas Fading
Test method : AATCC method 164
Temperature : 40 °C, relative humidity 65%
NOx concentration 5 ± 1 ppm.
Oven Ageing
Hanging samples in forced air oven @ 200 °C for 30 minutes.
The results are given in Table 1

**Table 1**

| | Delta YI Index After Ageing Test | | |
|---|---|---|---|
| Stabilizers | 30min Oven Ageing | 250h WOM Weathering | 72h Gas Fading |
| (C1) 0.8% Irganox 245® | 7 | 30 | 49 |
| (1) 0.3% Irganox 245® | 4 | 30 | 38 |
| 0.2% Irganox 1098® | | | |
| 0.1% Irganox HP136® | | | |
| 0.2% HN 150 | | | |
| (2) 0.5% Irganox 245® | 4 | 30 | 36 |
| 0.1% Irganox HP 136® | | | |
| 0.2% HN 150 | | | |
| (C2) 1 % Irganox 245® | 6 | 30 | 50 |
| (3) 0.6% Irganox 245® | 7 | 27 | 30 |
| 0.2% Tinuvin 622® | | | |
| 0.2% HN 150 | | | |
| (4) 1% Irganox 245® | 0.5 | 11 | 16 |
| 0.4% Tinuvin 622® | | | |
| 0.1% Tinuvin 144® | | | |
| 0.8% HN 150 | | | |

| | | | |
|---|---|---|---|
| Examples 1-4 clearly show less discoloration in all ageing tests compared to comparative examples C1 and C2. Irganox 245®, Irganox 1098®, Tinuvin 622®, Tinuvin 144® and Irganox HP 136® are commercial stabilizers from Ciba Specialty Chemicals inc. HN 150 is a commercial product from Hydrazine Comp., Japan. | | | |

## Claims

1. A composition comprising a segmented polyurethane and
a) one or more phenolic antioxidants,
b) a benzofuranone stabilizer and/or a sterically hindered amine stabilizer and
c) a hydrazine or hydrazide stabilizer.

2. A composition according to claim 1 wherein the phenolic antioxidant is selected from the group consisting of 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricydohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol, 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate, α-tocopherol, β-tocopherol, γ-tocopherol, δ-tocopherol, 2,2'-methylenebis(6-tert-butyl-4-methylphenol), 2,2'-methylene-bis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane, esters of β-(3,5-di-tert-butyl-4-hydroxyphenyl)-propionic acid with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, esters of β-(5-tert-butyl-4-hydroxy-3-methylphenyl)propionic acid with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-l-phospha-2,6,7 -trioxabicyclo[2 .2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]undecane, esters of β-(3,5-dicyclohexyl-4-hydroxyphenyl)propionic acid with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-l-phospha-2,6,7-trioxabicyclo[2.2.2]octane, esters of 3,5-di-tert-butyl-4-hydroxyphenyl acetic acid with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, N,N'-bis(3,5-di-tert-butyl-4-hydroxyphenylpropionyl)hexamethylenediamide, N, N'-bis(3,5-di-tert-butyl-4-hydroxyphenyl propionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide and mixtures thereof.

3. A composition according to claim 1 wherein the benzofuranone stabilizer is selected from the group consisting of 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethy)phenyl)-5,7-di-tert-butylbenzofuran-2-one or 3-(2-acetyl-5-isooctylphenyl)-5-isooctylbenzofuran-2-one.

4. A composition according to claim 1 wherein the sterically hindered amine stabilizer is selected from the group consisting of bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1 -octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine; N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cydoundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)-ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)oxymethyl-3,3,5-trimethyl-2-morpholinone, 5-(2-ethylhexanoyl)oxymethyl-3,3,5-trimethyl-2-morpholinone, the reaction product of 2,4-bis[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine and 1,3,5-tris(N-cyclohexyl-N-(1,2,2,6,6-pentamethylplperazine-3-one-4-yl)amino)-s-triazine.

5. A composition according to claim 1 wherein the hydrazine or hydrazide stabilizer is selected from the group consisting of N-salicylal-N'-salicyloyl hydrazine, N,N'-bis(salicyloyl)hydrazine, N,N'-bis(3,5-di-tert-butyl-4-hydroxyphenylpropionyl)hydrazine, bis(benzylidene)oxalyl dihydrazide, isophthaloyl dihydrazide, sebacoyl bisphenylhydrazide, N,N'-diacetyladipoyl dihydrazide, N,N'-bis(salicyloyl)oxalyl dihydrazide and N,N'-bis(salicyloyl)thiopropionyl dihydrazide.

6. A composition according to claim 1 wherein the phenolic antioxidant is a compound of formula (A) 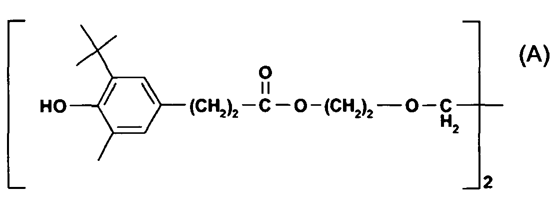 or formula (B)

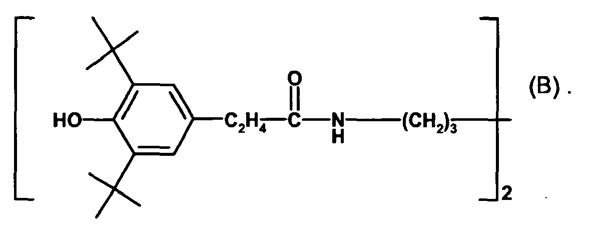

7. A composition according to claim 1 wherein the benzofuranone stabilizer is of formula (C)

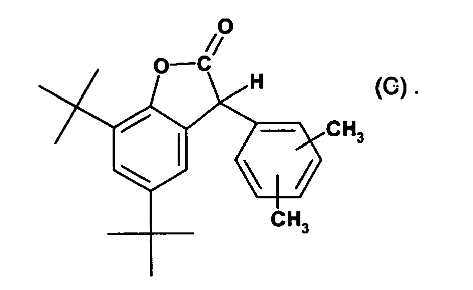

8. A composition according to claim 1 wherein the sterically hindered amine is of formula (D) or (E)

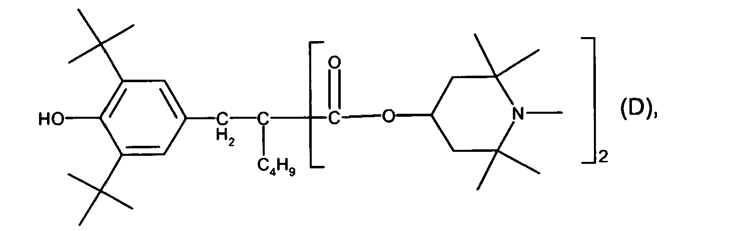

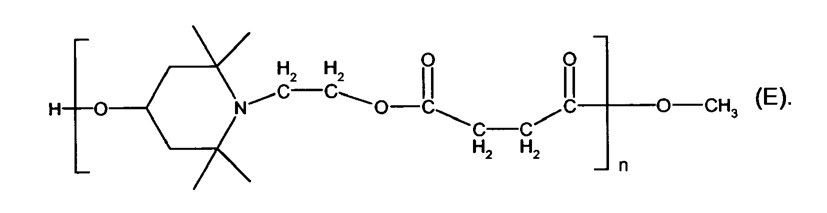

9. A composition according to claim 1 wherein the hydrazine or hydrazide is of formula (F) or (G)

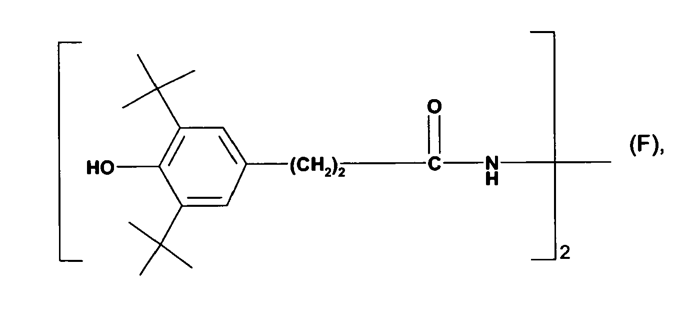

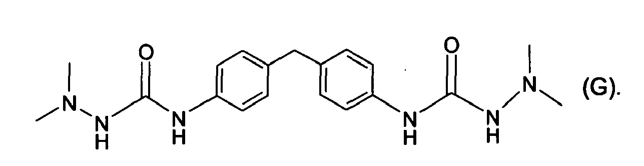

10. A composition according to claim 1 wherein the phenolic antioxidant is present in an amount from 0.3 - 1.0% by weight, the benzofuranone and/or sterically hindered amine stabilizer is present in an amount from 0.05 - 0.5% by weight and the hydrazine or hydrazide stabilizer is present in an amount of 0.1 - 0.5% by weight, based on the weight of the segmented polyurethane.

11. A composition according to claim 1 wherein the total amount of stabilizers is from 0.5 - 3% by weight, based on the weight of the segmented polyurethane.

12. A composition according to claim 1 wherein a UV-absorber is additionally present.

13. A process for improving heat and weathering resistance of a segmented polyurethane comprising incorporating into the segmented polyurethane
a) one or more phenolic antioxidants,
b) a benzofuranone stabilizer and/or a sterically hindered amine stabilizer and
c) a hydrazine or hydrazide stabilizer.

14. Use of a composition according to claim 1 as heat and weathering stabilizer and as stabilizer against NOₓ gas exposure for a segmented polyurethane.

## Patentansprüche

1. Zusammensetzung, umfassend ein segmentiertes Polyurethan und
a) ein oder mehrere phenolische Antioxidationsmittel,
b) einen Benzofuranonstabilisator und/oder einen sterisch gehinderten Aminstabilisator und
c) einen Hydrazin- oder Hydrazidstabilisator.

2. Zusammensetzung nach Anspruch 1, wobei das phenolische Antioxidationsmittel aus der Gruppe ausgewählt ist, bestehend aus 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenolen, welche in den Seitenketten linear oder verzweigt sind, beispielsweise 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol, 2,4-Dioctylthiomethyl-6-tert-butylphenol, 2,4-Dioctylthiomethyl-6-methylphenol, 2,4-Dioctylthiomethyl-6-ethylphenol, 2,6-Di-dodecylthiomethyl-4-nonylphenol, 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis(3,5-di-tert-butyl-4-hydroxyphenyl)adipat, α-Tocopherol, β-Tocopherol, γ-Tocopherol, δ-Tocopherol, 2,2'-Methylenbis(6-tert-butyl-4-methylphenol), 2,2'-Methylen-bis(6-tert-butyl-4-ethylphenol), 2,2'-Methylenbis[4-methyl-6-(α-methylcyclohexyl)phenol], 2,2'-Methylenbis-(4-methyl-6-cyclohexylphenol), 2,2'-Methylenbis(6-nonyl-4-methylphenol), 2,2'-Methylen-bis(4,6-di-tert-butylphenol), 2,2'-Ethylidenbis(4,6-di-tert-butylphenol), 2,2'-Ethylidenbis-(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methyl-phenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5',-methylbenzyl)-6-tert-butyl-4-methylphenyl]terephthalat, 1,1-Bis-(3,5-dimethyl-2-hydroxyphenyl)butan, 2,2-Bis(3,5-di-tert-butyl-4-hydroxyphenyl)-propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)pentan, Estern von β-(3,5-Di-tert-butyl-4-hydroxyphenyl)-propionsäure mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, Estern von β-(5-tert-Butyl-4-hydroxy-3-methylphenyl)propionsäure mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan; 3,9-Bis[2-{3-(3-tert-butyl-4-hydroxy-5-methylphenyl)-propionyloxy}-1,1-dimethylethyl]-2,4,8,10-tetraoxaspiro[5.5]undecan, Estern von β-(3,5-Dicyclohexyl-4-hydroxyphenyl)propionsäure mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, Estern von 3,5-Di-tert-butyl-4-hydroxyphenylessigsäure mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, N,N'-Bis-(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]propionyloxy)-ethyl]oxamid und Gemischen davon.

3. Zusammensetzung nach Anspruch 1, wobei der Benzofuranonstabilisator aus der Gruppe ausgewählt ist, bestehend aus 3-[4-(2-Acetoxyethoxy)phenyl]-5,7-di-tert-butylbenzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzofuran-2-on, 3-(3,4-Dimethylphenyl)-5,7-di-tert-butylbenzofuran-2-on, 3-(2,3-Dimethylphenyl)-5,7-di-tert-butylbenzofuran-2-on oder 3-(2-Acetyl-5-isooctylphenyl)-5-isooctylbenzofuran-2-on.

4. Zusammensetzung nach Anspruch 1, wobei der sterisch gehinderte Aminstabilisator aus der Gruppe ausgewählt ist, bestehend aus Bis(2,2,6,6-tetramethyl-4-piperidyl)sebacat, Bis-(2,2,6,6-tetramethyl-4-piperidyl)succinat, Bis(1,2,2,6,6-pentamethyl-4-piperidyl)sebacat, Bis-(1-octyloxy-2,2,6,6-tetramethyl-4-piperidyl)sebacat, Bis(1,2,2,6,6-pentamethyl-4-piperidyl)-n-butyl-3,5-di-tert-butyl-4-hydroxybenzylmalonat, dem Kondensat von 1-(2-Hydroxyethyl)-2,2,6,6-tetramethyl-4-hydroxypiperidin und Bernsteinsäure, linearen oder cyclischen Kondensaten von N,N'-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)sebacat, Bis(1-octyloxy-2,2,6,6-tetramethylpiperidyl)succinat, linearen oder cyclischen Kondensaten von N,N'-Bis(2,2,6,6-tetramethyl-4-piperidyl)hexamethylendiamin und 4-Morpholino-2,6-dichlor-1,3,5-triazin, dem Kondensat von 2-Chlor-4,6-bis(4-n-butylamino-2,2,6,6-tetramethylpiperidyl)-1,3,5-triazin und 1,2-Bis(3-aminopropylamino)-ethan, dem Kondensat von 2-Chlor-4,6-di-(4-n-butylamino-1,2,2,6,6-pentamethylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, einem Gemisch aus 4-Hexadecyloxy- und 4-Stearyloxy-2,2,6,6-tetramethylpiperidin, einem Kondensat von N,N'-Bis(2,2,6,6-tetramethyl-4-piperidyl)hexamethylendiamin und 4-Cyclohexylamino-2,6-dichlor-1,3,5-triazin, einem Kondensat von 1,2-Bis(3-aminopropylamino)ethan und 2,4,6-Trichlor-1,3,5-triazin sowie 4-Butylamino-2,2,6,6-tetramethylpiperidin (CAS Reg. Nr. [136504-96-6]); einem Kondensat von 1,6-Hexandiamin und 2,4,6-Trichlor-1,3,5-triazin sowie N,N-Dibutylamin und 4-Butylamino-2,2,6,6-tetramethylpiperidin; N-(2,2,6,6-Tetramethyl-4-piperidyl)-n-dodecylsuccinimid, N-(1,2,2,6,6-Pentamethyl-4-piperidyl)-n-dodecylsuccinimid, 2-Undecyl-7,7,9,9-tetramethyl-1-oxa-3,8-diaza-4-oxo-spiro[4,5]decan, einem Reaktionsprodukt von 7,7,9,9-Tetramethyl-2-cycloundecyl-1-oxa-3,8-diaza-4-oxospiro-[4,5]decan und Epichlorhydrin, 1,1-Bis-(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)hexamethylendiamin, einem Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, einem Reaktionsprodukt von Maleinsäureanhydrid-α-Olefincopolymer mit 2,2,6,6-Tetramethyl-4-aminopiperidin oder 1,2,2,6,6-Pentamethyl-4-aminopiperidin, 2,4-Bis[N-(1-cyclohexyloxy-2,2,6,6-tetramethylpiperidin-4-yl)-N-butylamino]-6-(2-hydroxyethyl)amino-1,3,5-triazin, 1-(2-Hydroxy-2-methylpropoxy)-4-octadecanoyloxy-2,2,6,6-tetramethylpiperidin, 5-(2-Ethylhexanoyl)oxymethyl-3,3,5-trimethyl-2-morpholinon, 5-(2-Ethylhexanoyl)oxymethyl-3,3,5-trimethyl-2-morpholinon, dem Reaktionsprodukt von 2,4-Bis[(1-cyclohexyloxy-2,2,6,6-piperidin-4-yl)-butylamino]-6-chlor-s-triazin mit N,N'-Bis(3-aminopropyl)ethylendiamin), 1,3,5-Tris-(N-cyclohexyl-N-(2,2,6,6-tetramethylpiperazin-3-on-4-yl)amino)-s-triazin und 1,3,5-Tris-(N-cyclohexyl-N-(1,2,2,6,6-pentamethylpiperazin-3-on-4-yl)amino)-s-triazin.

5. Zusammensetzung nach Anspruch 1, wobei der Hydrazin- oder Hydrazidstabilisator aus der Gruppe ausgewählt ist, bestehend aus N-Salicylal-N'-salicyloylhydrazin, N,N'-Bis-(salicyloyl)hydrazin, N,N'-Bis(3,5-di-tert-butyl-4-hydroxyphenylpropionyl)hydrazin, Bis(benzyliden)oxalyldihydrazid, Isophthaloyldihydrazid, Sebacoylbisphenylhydrazid, N,N'-Diacetyladipoyldihydrazid, N,N'-Bis(salicyloyl)oxalyldihydrazid und N,N'-Bis(salicyloyl)thiopropionyldihydrazid.

6. Zusammensetzung nach Anspruch 1, wobei das phenolische Antioxidationsmittel eine Verbindung der Formel (A) 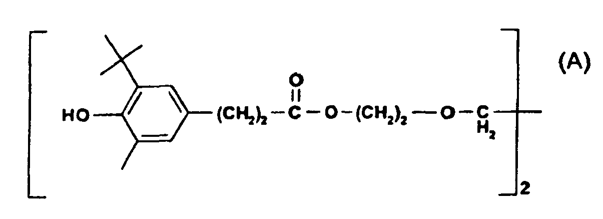 oder Formel (B) 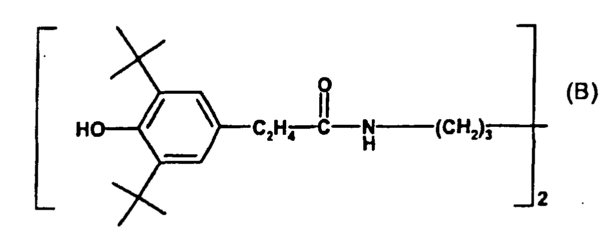 ist.

7. Zusammensetzung nach Anspruch 1, wobei der Benzofuranonstabilisator der der Formel (C) 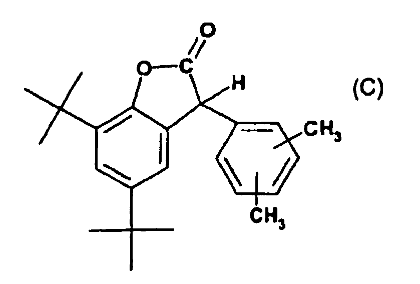 ist.

8. Zusammensetzung nach Anspruch 1, wobei das sterisch gehinderte Amin das der Formel (D) oder (E) 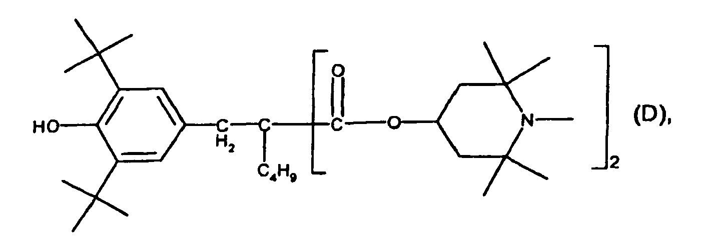 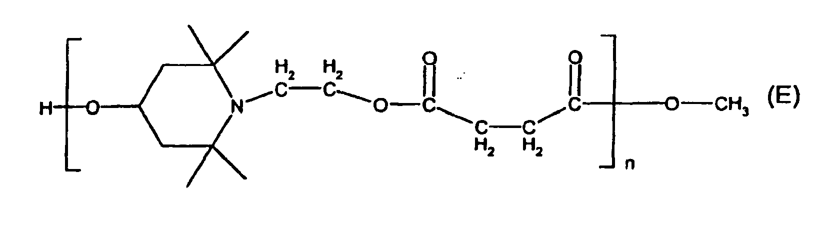 ist.

9. Zusammensetzung nach Anspruch 1, wobei das Hydrazin oder Hydrazid das der Formel (F) oder (G) 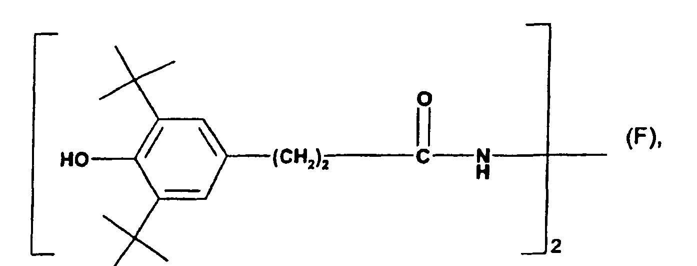 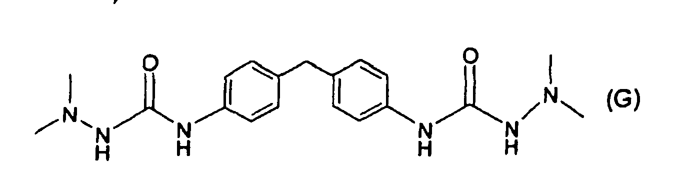 ist.

10. Zusammensetzung nach Anspruch 1, wobei das phenolische Antioxidationsmittel in einer Menge von 0,3 bis 1,0 Gew.-% vorliegt, der Benzofuranon- und/oder sterisch gehinderte Aminstabilisator in einer Menge von 0,05 bis 0,5 Gew.-% vorliegt und der Hydrazin- oder Hydrazidstabilisator in einer Menge von 0,1 bis 0,5 Gew.-% vorliegt, basierend auf dem Gewicht des segmentierten Polyurethans.

11. Zusammensetzung nach Anspruch 1, wobei die Gesamtmenge der Stabilisatoren 0,5 bis 3 Gew.-%, basierend auf dem Gewicht des segmentierten Polyurethans, beträgt.

12. Zusammensetzung nach Anspruch 1, wobei außerdem ein UV-Absorber vorliegt.

13. Verfahren zur Verbesserung der Wärme- und Witterungsbeständigkeit eines segmentierten Polyurethans, umfassend das Einführen
a) eines oder mehrerer phenolischer Antioxidationsmittel,
b) eines Benzofuranonstabilisators und/oder eines sterisch gehinderten Aminstabilisators und
c) eines Hydrazin- oder Hydrazidstabilisators
in das segmentierte Polyurethan.

14. Verwendung der Zusammensetzung nach Anspruch 1 als Wärme- und Witterungsstabilisator und als Stabilisator gegen NOₓ-Gasexponierung für ein segmentiertes Polyurethan.

## Revendications

1. Composition comprenant un polyuréthanne segmenté et
a) un ou plusieurs antioxydants phénoliques,
b) un stabilisant benzofuranone et/ou un stabilisant amine stériquement encombrée et
c) un stabilisant hydrazine ou hydrazide.

2. Composition selon la revendication 1, dans laquelle l'antioxydant phénolique est choisi dans le groupe constitué par :
le 2,6-di-tert-butyl-4-méthylphénol, le 2-tert-butyl-4,6-diméthylphénol, le 2,6-di-tert-butyl-4-éthylphénol, le 2,6-di-tert-butyl-4-n-butylphénol, le 2,6-di-tert-butyl-4-isobutylphénol, le 2,6-dicyclopentyl-4-méthylphénol, le 2-(α-méthylcyclohexyl)-4,6-diméthylphénol, le 2,6-dioctadécyl-4-méthylphénol, le 2,4,6-tricyclohexylphénol, le 2,6-di-tert-butyl-4-méthoxyméthylphénol, les nonylphénols qui sont linéaires ou ramifiés sur les chaînes latérales, par exemple le 2,6-di-nonyl-4-méthylphénol, le 2,4-diméthyl-6-(1'-méthylundéc-1'-yl)phénol, le 2,4-diméthyl-6-(1'-méthylheptadéc-1'-yl)phénol, le 2,4-diméthyl-6-(1'-méthyltridéc-1'-yl)phénol, le 2,4-dioctylthiométhyl-6-tert-butylphénol, le 2,4-dioctylthiométhyl-6-méthylphénol, le 2,4-dioctylthiométhyl-6-éthylphénol, le 2,6-di-dodécylthiométhyl-4-nonylphénol, le 2,6-di-tert-butyl-4-méthoxyphénol, la 2,5-di-tert-butylhydroquinone, la 2,5-di-tert-amylhydroquinone, le 2;6-diphényl-4-octadécyloxyphénol, la 2,6-di-tert-butylhydroquinone, le 2,5-di-tert-butyl-4-hydroxyanisole, le 3,5-di-tert-butyl-4-hydroxyanisole, le stéarate de 3,5-di-tert-butyl-4-hydroxyphényle, l'adipate de bis(3,5-di-tert-butyl-4-hydroxyphényle), l'α-tocophérol, le β-tocophérol, le γ-tocophérol, le δ-tocophérol, le 2,2'-méthylènebis(6-tert-butyl-4-méthylphénol), le 2,2'-méthylènebis(6-tert-butyl-4-éthylphénol), le 2,2-méthylènebis[4-méthyl-6-(α-méthylcyclohexyl)phénol], le 2,2'-méthylènebis(4-méthyl-6-cyclohexylphénol), le 2,2'-méthylènebis(6-nonyl-4-méthylphénol), le 2,2'-méthylènebis(4,6-di-tert-butylphénol), le 2,2'-éthylidènebis(4,6-di-tert-butylphénol), le 2,2'-éthylidènebis(6-tert-butyl-4-isobutylphénol), le 2,2'-méthylènebis[6-(α-méthylbenzyl)-4-nonylphénol], le 2,2'-méthylènebis[6-(α,α-diméthylbenzyl)-4-nonylphénol], le 4,4'-méthylènebis(2,6-di-tert-butylphénol), le 4,4'-méthylènebis(6-tert-butyl-2-méthylphénol), le 1,1-bis(5-tert-butyl-4-hydroxy-2-méthylphényl)butane, le 2,6-bis(3-tert-butyl-5-méthyl-2-hydroxybenzyl)-4-méthylphénol, le 1,1,3-tris(5-tert-butyl-4-hydroxy-2-méthylphényl)butane, le 1,1-bis(5-tert-butyl-4-hydroxy-2-méthyl-phényl)-3-n-dodécylmercaptobutane, le bis[3,3-bis(3'-tert-butyl-4'-hydroxyphényl)butyrate] d'éthylèneglycol, le bis(3-tert-butyl-4-hydroxy-5-méthylphényl)dicyclopentadiène, le bis[2-(3'-tert-butyl-2'-hydroxy-5'-méthylbenzyl)-6-tert-butyl-4-méthylphényl]téréphtalate, le 1,1-bis-(3,5-diméthyl-2-hydroxyphényl)butane, le 2,2-bis(3,5-di-tert-butyl-4-hydroxyphényl)propane, le 2,2-bis(5-tert-butyl-4-hydroxy-2-méthylphényl)-4-n-dodécylmercaptobutane, le 1,1,5,5-tétra-(5-tert-butyl-4-hydroxy-2-méthylphényl)-pentane, les esters de l'acide β-(3,5-di-tert-butyl-4-hydroxyphényl)-propionique avec le méthanol, l'éthanol, le n-octanol, l'i-octanol, l'octadécanol, le 1,6-hexanediol, le 1,9-nonanediol, l'éthylèneglycol, le 1,2-propanediol, le néopentylglycol, le thiodiéthylèneglycol, le diéthylèneglycol, le triéthylèneglycol, le pentaérythritol, le tris(hydroxyéthyl)isocyanurate, le N,N'-bis(hydroxyéthyl)oxamide, le 3-thiaundécanol, le 3-thiapentadécanol, le triméthylhexanediol, le triméthylolpropane, le 4-hydroxyméthyl-1-phospha-2,6,7-trioxabicyclo[2.2.2]octane, les esters de l'acide β-(5-tert-butyl-4-hydroxy-3-méthylphényl)propionique avec le méthanol, l'éthanol, le n-octanol, l'i-octanol, l'octadécanol, le 1,6-hexanediol, le 1,9-nonanediol, l'éthylèneglycol, le 1,2-propanediol, le néopentylglycol, le thiodiéthylèneglycol, le diéthylèneglycol, le triéthylèneglycol, le pentaérythritol, le tris(hydroxyéthyl)isocyanurate, le N,N'-bis(hydroxyéthyl)oxamide, le 3-thiaundécanol, le 3-thiapentadécanol, le triméthylhexanediol, le triméthylolpropane, le 4-hydroxyméthyl-1-phospha-2,6,7-trioxabicyclo[2.2.2]octane, le 3,9-bis[2-(3-(3-tert-butyl-4-hydroxy-5-méthylphényl)propionyloxy)-1,1-diméthyléthyl]-2,4,8,10-tétraoxaspiro[5.5]undécane, les esters de l'acide β-(3,5-dicyclohexyl-4-hydroxyphényl)propionique avec le méthanol, l'éthanol, l'octanol, l'octadécanol, le 1,6-hexanediol, le 1,9-nonanediol, l'éthylèneglycol, le 1,2-propanediol, le néopentylglycol, le thiodiéthylèneglycol, le diéthylèneglycol, le triéthylèneglycol, le pentaérythritol, le tris(hydroxyéthyl)isocyanurate, le N,N'-bis(hydroxyéthyl)oxamide, le 3-thiaundécanol, le 3-thiapentadécanol, le triméthylhexanediol, le triméthylolpropane, le 4-hydroxyméthyl-1-phospha-2,6,7-trioxabicyclo[2.2.2]octane, les esters de l'acide 3,5-di-tert-butyl-4-hydroxyphénylacétique avec le méthanol, l'éthanol, l'octanol, l'octadécanol, le 1,6-hexanediol, le 1,9-nonanediol, l'éthylèneglycol, le 1,2-propanediol, le néopentylglycol, le thiodiéthylèneglycol, le diéthylèneglycol, le triéthylèneglycol, le pentaérythritol, le tris(hydroxyéthyl)isocyanurate, le N,N'-bis(hydroxyéthyl)oxamide, le 3-thiaundécanol, le 3-thiapentadécanol, le triméthylhexanediol, le triméthylolpropane, le 4-hydroxyméthyl-1-phospha-2,6,7-trioxabicyclo[2.2.2]octane, le N,N'-bis(3,5-di-tert-butyl-4-hydroxyphénylpropionyl)hexaméthylènediamide, le N,N'-bis(3,5-di-tert-butyl-4-hydroxyphénylpropionyl)-triméthylènediamide, le N,N'-bis(3,5-di-tert-butyl-4-hydroxyphénylpropionyl)hydrazide, le N,N'-bis[2-(3-[3,5-di-tert-butyl-4-hydroxyphényl]-propionyloxy)éthyl]oxamide et les mélanges de ceux-ci.

3. Composition selon la revendication 1, dans laquelle le stabilisant benzofuranone est choisi dans le groupe constitué par la 3-[4-(2-acétoxyéthoxy)phényl]-5,7-di-tert-butylbenzofuran-2-one, la 5,7-di-tert-butyl-3-[4-(2-stéaroyloxyéthoxy)phényl]benzofuran-2-one, la 3,3'-bis[5,7-di-tert-butyl-3-(4-[2-hydroxyéthoxy]phényl)benzofuran-2-one], la 5,7-di-tert-butyl-3-(4-éthoxyphényl)benzo-furan-2-one, la 3-(4-acétoxy-3,5-diméthylphényl)-5,7-di-tert-butylbenzofuran-2-one, la 3-(3,5-diméthyl-4-pivaloyloxyphényl)-5,7-di-tert-butylbenzofuran-2-one, la 3-(3,4-diméthylphényl)-5,7-di-tert-butylbenzofuran-2-one, la 3-(2,3-diméthylphényl)-5,7-di-tert-butylbenzofuran-2-one ou la 3-(2-acétyl-5-isooctylphényl)-5-isooctylbenzofuran-2-one.

4. Composition selon la revendication 1, dans laquelle le stabilisant amine stériquement encombrée est choisi dans le groupe constitué par le bis(2,2,6,6-tétraméthyl-4-pipéridyl)sébacate, le bis(2,2,6,6-tétraméthyl-4-pipéridyl)succinate, le bis(1,2,2,6,6-pentaméthyl-4-pipéridyl)sébacate, le bis(1-octyloxy-2,2,6,6-tétraméthyl-4-pipéridyl)sébacate, le n-butyl-3,5-di-tert-butyl-4-hydroxybenzylmalonate de bis(1,2,2,6,6-pentaméthyl-4-pipéridyle), le produit de condensation de la 1-(2-hydroxyéthyl)-2,2,6,6-tétraméthyl-4-hydroxypipéridine et de l'acide succinique, les produits de condensation linéaires ou cycliques de la N,N'-bis(2,2,6,6-tétraméthyl-4-pipéridyl)hexaméthylènediamine et de la 4-tert-octylamino-2,6-dichloro-1,3,5-triazine, le tris(2,2,6,6-tétraméthyl-4-pipéridyl)nitrilotriacétate, le tétrakis(2,2,6,6-tétraméthyl-4-pipéridyl)-1,2,3,4-butanetétracarboxylate, la 1,1'-(1,2-éthanediyl)-bis(3,3,5,5-tétraméthylpipérazinone), la 4-benzoyl-2,2,6,6-tétraméthylpipéridine, la 4-stéaryloxy-2,2,6,6-tétraméthylpipéridine, le bis(1,2,2,6,6-pentaméthylpipéridyl)-2-n-butyl-2-(2-hydroxy-3,5-di-tert-butylbenzyl)-malonate, la 3-n-octyl-7,7,9,9-tétraméthyl-1,3,8-triazaspiro[4.5]décane-2,4-dione, le bis(1-octyloxy-2,2,6,6-tétraméthylpipéridyl)sébacate, le bis(1-octyloxy-2,2,6,6-tétraméthylpipéridyl)succinate, les produits de condensation linéaires ou cycliques de la N,N'-bis(2,2,6,6-tétraméthyl-4-pipéridyl)hexaméthylènediamine et de la 4-morpholino-2,6-dichloro-1,3,5-triazine, le produit de condensation de la 2-chloro-4,6-bis(4-n-butylamino-2,2,6,6-tétraméthylpipéridyl)-1,3,5-triazine et du 1,2-bis(3-aminopropylamino)-éthane, le produit de condensation de la 2-chloro-4,6-di-(4-n-butylamino-1,2,2,6,6-pentaméthylpipéridyl)-1,3,5-triazine et du 1,2-bis(3-aminopropylamino)éthane, la 8-acétyl-3-dodécyl-7,7,9,9-tétraméthyl-1,3,8-triazaspiro[4.5]décane-2,4-dione, la 3-dodécyl-1-(2,2,6,6-tétraméthyl-4-pipéridyl)pyrrolidine-2,5-dione, la 3-dodécyl-1-(1,2,2,6,6-pentaméthyl-4-pipéridyl)pyrrolidine-2,5-dione, un mélange de 4-hexadécyloxy- et 4-stéaryloxy-2,2,6,6-tétraméthylpipéridine, un produit de condensation de la N,N'-bis(2,2,6,6-tétraméthyl-4-pipéridyl)hexaméthylènediamine et de la 4-cyclohexylamino-2,6-dichloro-1,3,5-triazine, un produit de condensation de la 1,2-bis(3-aminopropylamino) éthane et de la 2,4,6-trichloro-1,3,5-triazine ainsi que de la 4-butylamino-2,2,6,6-tétraméthylpipéridine (CAS: [136504-96-6]); un produit de condensation de la 1,6-hexanediamine et de la 2,4,6-trichloro-1,3,5-triazine ainsi que de la N,N-dibutylamine et de la 4-butylamino-2,2,6,6-tétraméthylpipéridine ; le N-(2,2,6,6-tétraméthyl-4-pipéridyl)-n-dodécylsuccinimide, le N-(1,2,2,6,6-pentaméthyl-4-pipéridyl)-n-dodécylsuccinimide, le 2-undécyl-7,7,9,9-tétraméthyl-1-oxa-3,8-diaza-4-oxo-spiro[4.5]décane, un produit de la réaction du 7,7,9,9-tétraméthyl-2-cycloundécyl-1-oxa-3,8-diaza-4-oxospiro-[4.5]décane et de l'épichlorhydrine, le 1,1-bis(1,2,2,6,6-pentaméthyl-4-pipéridyloxycarbonyl)-2-(4-méthoxyphényl)-éthène, la N,N'-bis-formyl-N,N'-bis(2,2,6,6-tétraméthyl-4-pipéridyl)hexaméthylènediamine, un diester de l'acide 4-méthoxyméthylènemalonique avec la 1,2,2,6,6-pentaméthyl-4-hydroxypipéridine, le poly[méthylpropyl-3-oxy-4-(2,2,6,6-tétraméthyl-4-pipéridyl)]siloxane, un produit de la réaction du copolymère anhydride acide maléique/α-oléfine avec la 2,2,6,6-tétraméthyl-4-aminopipéridine ou la 1,2,2,6,6-pentaméthyl-4-aminopipéridine, la 2,4-bis[N-(1-cyclohexyloxy-2,2,6,6-tétraméthylpipéridin-4-yl)-N-butylamino]-6-(2-hydroxyéthyl)amino-1,3,5-triazine, la 1-(2-hydroxy-2-méthylpropoxy)-4-octadécanoyloxy-2,2,6,6-tétraméthylpipéridine, la 5-(2-éthylhexanoyl)oxyméthyl-3,3,5-triméthyl-2-morpholinone, la 5-(2-éthylhexanoyl)oxyméthyl-3,3,5-triméthyl-2-morpholinone, le produit de la réaction de la 2,4-bis[(1-cyclohexyloxy-2,2,6,6-pipéridin-4-yl)butylamino]-6-chloro-s-triazine avec la N,N'-bis(3-aminopropyl)éthylènediamine), la 1,3,5-tris(N-cyclohexyl-N-(2,2,6,6-tétraméthylpipérazin-3-on-4-yl)amino)-s-triazine et la 1,3,5-tris(N-cyclohexyl-N-(1,2,2,6,6-pentaméthylpipérazin-3-on-4-yl)amino)-s-triazine.

5. Composition selon la revendication 1, dans laquelle le stabilisant hydrazine ou hydrazide est choisi dans le groupe constitué par la N-salicylal-N'-salicyloylhydrazine, la N,N'-bis(salicyloyl)hydrazine, la N,N'-bis(3,5-di-tert-butyl-4-hydroxyphénylpropionyl)-hydrazine, le bis(benzylidène)oxalyldihydrazide, l'isophtaloyldihydrazide, le sébacoylbisphénylhydrazide, le N,N'-diacétyladipoyldihydrazide, le N,N'-bis(salicyloyl)oxalyldihydrazide et le N,N'-bis(salicyloyl)thiopropionyldihydrazide.

6. Composition selon la revendication 1, dans laquelle l'antioxydant phénolique est un composé : de formule (A) 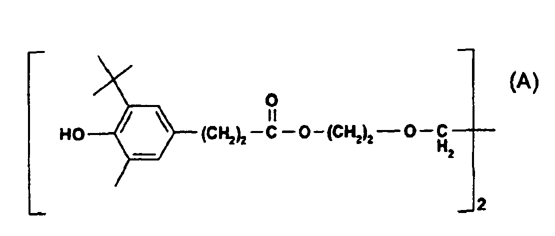 ou de formule (B)

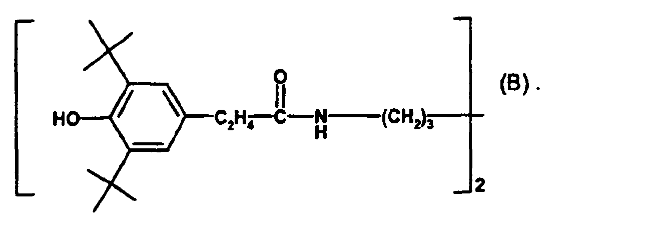

7. Composition selon la revendication 1, dans laquelle le stabilisant benzofuranone est de formule (C) :

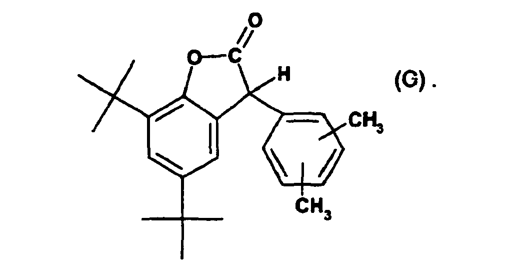

8. Composition selon la revendication 1, dans laquelle l'amine stériquement encombrée est de formule (D) ou (E) :

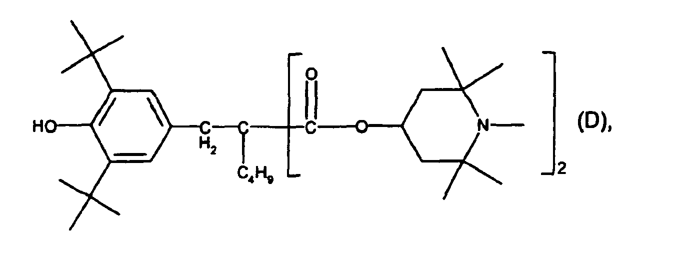

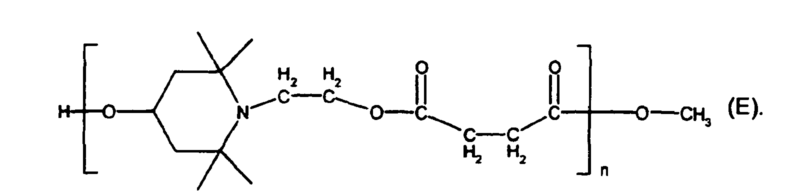

9. Composition selon la revendication 1, dans laquelle l'hydrazine ou l'hydrazide est de formule (F) ou (G) :

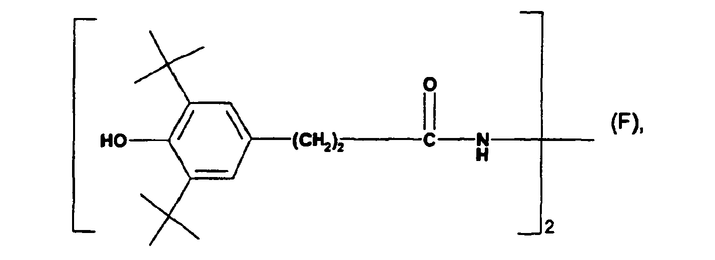

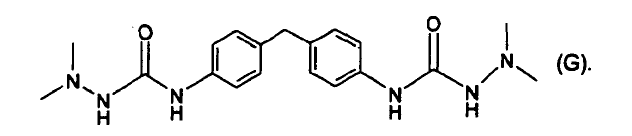

10. Composition selon la revendication 1, dans laquelle l'antioxydant phénolique est présent à raison de 0,3% à 1,0% en poids, le stabilisant benzofuranone et/ou amine stériquement encombrée est présent à raison de 0,05% à 0,5% en poids et le stabilisant hydrazine ou hydrazide est présent à raison de 0,1% à 0,5% en poids, par rapport au poids du polyuréthane segmenté.

11. Composition selon la revendication 1, dans laquelle la quantité totale de stabilisants va de 0,5% à 3% en poids, par rapport au poids du polyuréthane segmenté.

12. Composition selon la revendication 1, dans laquelle un absorbeur d'ultraviolets est en plus présent.

13. Procédé d'amélioration de la résistance à la chaleur et aux agents climatiques d'un polyuréthane segmenté, comprenant l'incorporation, dans le polyuréthane segmenté, de
a) un ou plusieurs antioxydants phénoliques,
b) un stabilisant benzofuranone et/ou un stabilisant amine stériquement encombrée et
c) un stabilisant hydrazine ou hydrazide.

14. Utilisation d'une composition selon la revendication 1 en tant que stabilisant envers la chaleur et les agents climatiques et en tant que stabilisant envers l'exposition aux gaz à NOₓ pour un polyuréthane segmenté.
